# EUROPEAN PATENT SPECIFICATION

(11) **EP 2 798 207 B1**
(45) Date of publication and mention of the grant of the patent: **09.03.2016**
(21) Application number: 12810052.6
(22) Date of filing: 19.12.2012
(51) Int. Cl.: F03D 80/00

(54) **A WIND TURBINE AND A METHOD FOR DETERMINING THE PRESENCE AND/OR THICKNESS OF AN ICE LAYER ON A BLADE BODY OF A WIND TURBINE**
WINDTURBINE UND VERFAHREN ZUR BESTIMMUNG DES VORHANDENSEINS UND/ODER DER DICKE EINER EISSCHICHT AUF EINEM SCHAUFELKÖRPER DER WINDTURBINE
TURBINE ÉOLIENNE ET PROCÉDÉ DE DÉTERMINATION DE LA PRÉSENCE ET/OU DE L'ÉPAISSEUR D'UNE COUCHE DE GLACE SUR UN CORPS DE PALE D'UNE TURBINE ÉOLIENNE

(30) Priority: 29.12.2011 DK 201170761; 30.12.2011 US 201161581648 P
(43) Date of publication of application: 05.11.2014
(73) Proprietor: Vestas Wind Systems A/S, 8200 Aarhus N (DK)
(72) Inventor: KIM, Whye Ghee, Singapore 640443 (SG); CHONG, Kok Leong, Singapore 460047 (SG); CHANG, Yun Chong Gabriel, Singapore 640635 (SG); LIM, Li Hong Idris, Singapore 760801 (SG)
(74) Representative: Vestas Patents Department
(86) International application number: PCT/DK2012/050480
(87) International publication number: WO 2013/097857

(56) References cited:
- EP-A2- 1 466 827
- WO-A1-01/11582
- WO-A1-2010/069534
- WO-A2-2011/117246
- US-A- 4 797 660

## Description

### Field of Invention

The present invention relates to a wind turbine, such as a wind turbine with a blade and with an ice detection system.

### Background

During the operation of a wind turbine in cold weather, ice may be formed on the surface of wind turbine blades due to freezing of water on the cold surface. The accumulation of ice on the surface can result in undesirable consequences. For example, a change in the profile of the wind turbine blades due to the accumulation of ice reduces the lift-drag ratio of the airfoil which can result in a decrease in the speed of rotation of the wind turbine. When this happens, the wind turbine is unable to obtain optimal speed and efficiency of the wind turbine is reduced. In addition, the weight of the ice accumulated on the wind turbine blades would add weight to the blades and would cause stress on the blades. This may result in stress failure in the blades.

Apart from visual inspection, there have been many attempts made to detect the formation or accumulation of ice on the blade. One attempt is the use of electromagnetic radiation, e.g. infra-red, to detect the presence of ice by irradiating an ice accumulation e.g. with infra-red light and comparing the reflected light with the light reflected at a surface without ice accumulation to determine the accumulation of ice. However, such an attempt does not accurately determine the presence and thickness of ice. In another attempt, a system uses a light beam emitted from a transmitter and received by a receiver to detect ice and ice is detected due to the disruption of the light beam by the presence of ice between the transmitter and receiver. In this attempt, the fixture of the transmitter and receiver disrupts the aerodynamics of the blade and reduces the efficiency of the blade.

WO 2010/069534 A1 describes a turbulence sensor and blade condition sensor system. US 4797660 A describes a photoelectric ice accumulation monitor using dual detectors. EP 1466827 A2 describes a method and a device for detecting icing of a surface. WO 01/11582 A1 describes an optical ice detector. WO 2011/117246 A2 describes a method for de- icing the blades of a wind turbine and to a wind turbine with a de-icing system.

The present invention aims to provide a system used for detecting ice on a wind turbine blade which reduced or avoids the disadvantages discussed above.

### Description of the Invention

The present invention provides a wind turbine comprising a blade and a hub connected to the blade rotatable about an axis. The blade has an elongated blade body extending along a longitudinal axis and having a blade root at one longitudinal end of the blade body and a blade tip at another longitudinal end of the blade body. The blade body is connected to the hub via the blade root. The blade body further has a leading edge and a trailing edge, both extending from the blade root to the blade tip. The trailing edge is spaced from the leading edge in a span-wise direction of the blade body. The blade body further has an upper skin and a lower skin extending from the leading edge to the trailing edge and from the blade root to the blade tip. The lower skin is spaced from the upper skin in a thickness direction of the blade body. The wind turbine further has a system for detecting an ice layer on the blade body. The system comprises a light source for emitting a light beam, a light splitting optical element optically connected to the light source so as to receive the light beam emitted from the light source. The light splitting optical element is adapted to split the light beam received from the light source into a reference light beam and a detecting light beam. A boundary area is arranged at the blade body so as to be exposed to the outer surroundings of the blade body and is optically connected to the light splitting optical element such as to receive the detecting light beam. The boundary area is arranged to reflect an internal reflected part of the detecting light beam at the boundary area and to transmit a transmitting part of the detecting light beam to the outer surroundings of the blade body through the boundary area and to allow an external reflected part of the transmitting part of the detecting light beam, which has been reflected from outside of the blade body, to be re-transmitted through the boundary area. The system further comprises a light measuring device optically connected to the light splitting optical element so as to receive the reference light beam, the internal reflected part of the detecting light beam and the external reflected part of the detecting light beam. The light measuring device is configured to analyze the received light and to determine the presence and/or thickness of the ice layer on the blade body dependent on the analysis.

The wind turbine enables accurate determination of the ice layer formed on the wind turbine blade. This contributes to prevent an accumulation of the ice layer, what contributes to maintaining the efficiency of the wind turbine.

The boundary area may comprise a single boundary surface or may comprise further boundary surfaces at which the detecting light beam is at least partially transmitted and/or reflected.

According to an aspect of the present invention, the analysis comprises measuring the spectral properties of the received light to obtain spectral data of the received light and converting the obtained spectral data into data which are representative for the presence and/or thickness of the ice layer on the blade body. This contributes to easily and accurately carrying out the analysis.

According to another aspect, the converting of the spectral data into the data which are representative for the presence and/or thickness of the ice layer on the blade body comprises performing a Fourier Transformation on the spectral data. This contributes to accurately carrying out the analysis in an easy way.

According to another aspect, the analysis comprises comparing the spectral data with pre-determined spectral data of a predetermined ice thickness to determine the thickness of the ice layer on the blade body. This contributes to accurately carrying out the analysis in an easy way.

According to another aspect, the measuring device comprises a spectral splitting element so as to split up the received light according to its wavelengths and a sensor array for measuring the intensities of the received light dependent on its wavelengths for measuring the spectral properties of the received light, wherein the intensities of the received light dependent on its wavelengths represent the spectral data. This contributes to easily and accurately carrying out the analysis.

According to another aspect, the boundary area is arranged at the blade body so as to allow a first external reflected part and a second external reflected part of the transmitting part of the detecting light beam, which have been reflected from outside of the blade body, to be re-transmitted through the boundary area.

According to another aspect, a graph representing the converted spectral data comprises at least one intensity peak for a specific thickness, wherein the thickness of the ice layer can be determined dependent on the thickness at which the intensity peak occurs. This allows the determination of the thickness and hence the presence of ice layer in an easy way.

According to another aspect, the light splitting optical element is optically connected to the light source via an emitting light guide. This contributes to connect the optical element and the light source in an easy way.

According to another aspect, the boundary area is optically connected to the light splitting optical element via a detecting light guide. This contributes to connect the light splitting optical element and the boundary area in an easy way. Additionally, there may be provided a further detecting light guide, wherein the detecting light guide guides the detecting light beam to the boundary surface and the further detecting light guide guides the reflected parts of the detecting light beam back to the light splitting optical element.

According to another aspect, the boundary area is an axial end of the detecting light guide. This contributes to form the boundary area in an easy way.

According to another aspect, the light measuring device is optically connected to the light splitting optical element via a measuring light guide.

According to another aspect, a surface of the boundary area facing the outer surroundings is flush with the upper or lower skin of the blade body. This prevents any disruption to the surface of the wind turbine blade by the boundary area, what contributes to maintain the aerodynamic and therefore the efficiency of the wind turbine blade.

According to another aspect, the boundary area is arranged at the leading edge of the blade body. This is to allow the determination of the ice layer formation at the leading edge where ice layers are most likely to form so as to enable quick and early detection of the ice layer formation.

According to another aspect, the boundary area is arranged at a distance substantially one third of the length from the blade root to the blade tip from the blade tip along the leading edge. This is to allow the determination of the presence of the ice layer at the part of the wind turbine blade where the ice layer has the most effect on the efficiency of the wind turbine blade. This contributes to maintaining the efficiency of the wind turbine.

According to another aspect, the light splitting optical element comprises at least two triangular prisms, each prism having a base, wherein the two prisms are in contact with each other at their base to form a prism interface at an angle to the light beam emitted from the light source wherein the light beam emitted from the light source upon impacting the prism interface is split into the reference light beam and detecting light beam.

According to another aspect, the light splitting optical element comprises a half-silvered mirror arranged at an angle to the light beam emitted from the light source wherein the light beam emitted from the light source upon impacting the mirror is split into the reference light beam and detecting light beam. This enables to split the light beam emitted from the light source into the reference light beam and detecting light beam in an easy way.

According to another aspect, the light splitting optical element is a 50/50 beam splitter. This allows an even splitting of the light beam emitted from the light source into the reference light beam and the detecting light beam.

According to another aspect, the light source emits white light. This contributes to very accurately carrying out the analysis to determine the thickness of the ice layer, because white light has a broad spectrum of wavelengths, which contributes to the accurate measurement of the thickness of ice layer

According to another aspect, at least one of the light guides comprises a fiber optic cable.

According to another aspect, the light measuring device comprises a spectrometer.

According to another aspect, the boundary area comprises a first and a second boundary surface. The second boundary surface is spaced apart from the first boundary surface. Both surfaces are optically connected to the light splitting optical element. The first boundary surface faces the outer surrounding of the blade body. The second boundary surface is adapted to receive the detecting light beam from the light splitting optical element, to reflect a first internal reflected part of the detecting light beam, and to transmit a first transmitting part of the detecting light beam. The first boundary surface is adapted to receive the first transmitting part, to reflect a second internal reflected part of the detecting light beam back towards the second boundary surface, to transmit a second transmitting part of the detecting light beam to the outer surroundings, and to receive the external reflected part of the second transmitting part of the detecting light beam.

Arranging a boundary area having two or more boundary surfaces may contribute to protect an interior of the wind turbine blade. This is especially advantageous, if the detecting light beam is guided to the boundary area by the detecting light guide, because the second boundary surface at end of the detecting light guide and/or the detecting light guide may be protected from contamination from external sources. In this context, the boundary area may comprise a substrate having to opposing surfaces which form the first boundary surface and the second boundary surface.

The present invention provides a method for determining the presence and/or thickness of an ice layer on a blade body of a wind turbine comprising the following steps. Generating a light beam, for example with the help of the light source and splitting the light beam into a reference light beam and a detecting light beam, for example with the help of the light splitting optical element, which is optically connected to the light source and a boundary area, wherein the internal reflected part of the detecting light beam is reflected at the boundary area and the transmitting part of the detecting light beam transmits through the boundary area to the outer surroundings of the blade body and wherein an external reflected part of the transmitting part of the detecting light beam re-transmits through the boundary area. The method further comprises the steps of receiving the reference light beam, the internal reflected part of the detecting light beam and/or the external reflected part of the detecting light beam, analyzing the received light and determining the presence and/or thickness of the ice layer on the blade body dependent the spectral data. The method allows accurate determination of thickness of ice layer formed on the blade body of the wind turbine.

### Brief Description of the Drawings

In the drawings, same reference characters generally refer to the same parts throughout the figures. The drawings are not necessarily to scale, emphasis instead generally being placed upon illustrating the principles of the invention. In the following description, various embodiments of the invention are described with reference to the following drawings, in which:
Fig. 1 shows a common setup of a wind turbine;
Fig. 2 shows a perspective view of an embodiment of a wind turbine blade;
Fig. 3 shows a perspective view of a segment of the wind turbine blade in Fig. 2;
Fig. 4 shows a perspective view of an embodiment of a system of the wind turbine;
Fig. 5 shows a schematic diagram of the system shown in Fig. 4;
Fig. 6 shows schematic diagram of an embodiment of a processor of the system;
Fig. 7 shows spectral data obtained from the system;
Fig. 8 shows data converted by a transformation of the spectral data of Fig. 7;
Fig. 9 shows a detailed view of a first embodiment of a boundary area with light paths of light beams;
Fig. 10 shows a second embodiment of a boundary area;
Fig. 11 shows a flow-chart of an embodiment of a method for detecting the presence and/or thickness of an ice layer formed on the wind turbine blade;
Fig. 12 shows a flowchart of an analyzing step of the method in Fig. 11;
Fig. 13 shows a flowchart of a converting step of the method in Fig. 12; and
Fig. 14 shows a flowchart of another analyzing step of the method in Fig. 13.

### Description

The following detailed description refers to the accompanying drawings that show, by way of illustration, specific details and embodiments in which the invention may be practiced. These embodiments are described in sufficient detail to enable those skilled in the art to practice the invention. Other embodiments may be utilized and structural, logical, and electrical changes may be made without departing from the scope of the invention. The various embodiments are not necessarily mutually exclusive, as some embodiments can be combined with one or more other embodiments to form new embodiments.

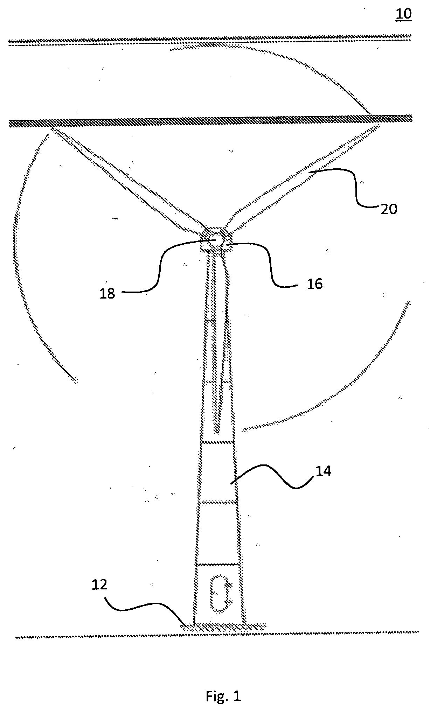

Fig. 1 shows a common setup of a wind turbine 10 which includes rotor blades or wind turbine blades 20 having a system for detecting accumulation of an ice layer on the wind turbine blades 20. The wind turbine 10 is mounted on a base 12. The wind turbine 10 includes a tower 14 having a number of tower sections. A wind turbine nacelle 16 is placed on top of the tower 14. A wind turbine rotor, connected to the nacelle 16, includes a hub 18 rotatable about an axis and at least one wind turbine blade, e.g. three wind turbine blades 20.

The wind turbine blades 20 are connected to the hub 18 which in turn is rotatably connected to the nacelle 16 through a low speed shaft (not shown in Fig. 1) which extends out of the front of the nacelle 16. The low speed shaft is coupled to a generator (not shown in Fig. 1) for generating power.

The wind turbine blades 20 rotate together with the hub 18 at about the axis when wind blows against the wind turbine blades 20 and the low speed shaft, which is connected to the hub 18, rotates to drive the generator to generate power.

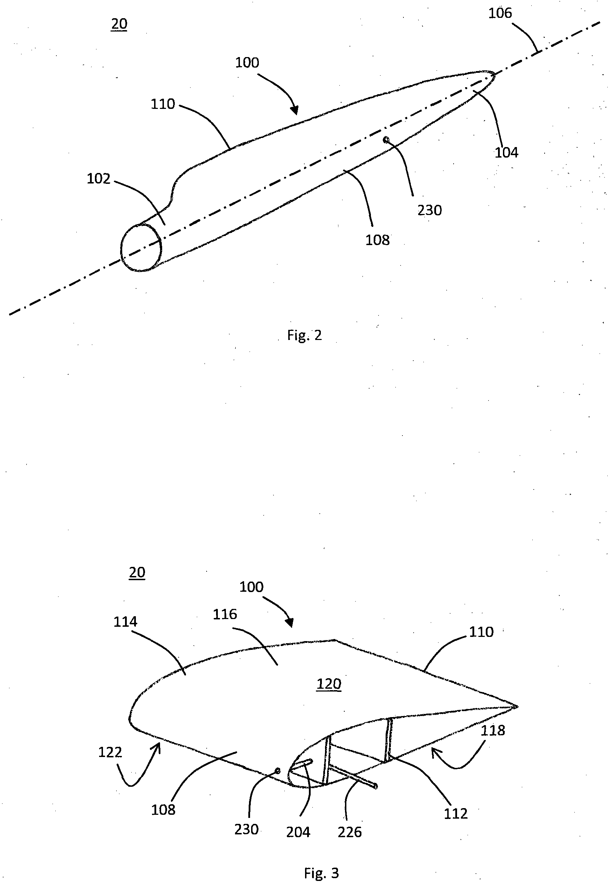

Fig. 2 shows an exemplary embodiment of the wind turbine blade 20 of the present invention. As shown in Fig. 2, the wind turbine blade 20 has an elongated blade body 100 extending along a longitudinal axis 106. The blade body 100 has a root 102 at one longitudinal end of the blade body 100, the root 102 is connected the hub 18 of the wind turbine 10 (see Fig. 1), and a tip 104 at the other longitudinal end of the blade body 100, the tip 104 being a free end of the blade body 100. The blade body 100 has an airfoil cross-sectional area (see Fig. 3), perpendicular to the longitudinal axis 106 of the blade body 100 and the cross-sectional area proximate the root 102 is larger than the cross-sectional area proximate the tip 104 and the cross-sectional area of the blade body 100 at about the blade root 102 reduces along the longitudinal axis 106 to the tip 104. The blade body 100 has a leading edge 108 (edge contacting the wind first) extending substantially from the root 102 to the tip 104 and a trailing edge 110 (edge where the wind leaves the blade) extending substantially from the root 102 to the tip 104 opposite and spaced from the leading edge 108 in a span-wise direction of the blade body 100. The wind turbine blade 20 has a boundary area 230 on the blade body 100, the boundary area 230 being part of a system 200 (see figure 3) for detecting an ice layer that may be formed over the boundary layer on the wind turbine blade 20.

As shown in Fig. 3, the blade body 100 has a spar 112 within the blade body 100 and the spar 112 extends substantially along the length of the blade body 110 from or from about the blade root 102 to or to about the blade tip 104 (although only a portion of the length of the spar 112 is shown in Fig. 3) to provide structural strength and integrity to the blade body 100. The shape of the blade body 100 is formed by a shell 114 which is attached to the spar 112 as shown in Fig. 3. The shell 114 has an airfoil cross-section as shown in Fig. 3. The shell 114 is formed by an upper skin 116 and a lower skin 118 spaced apart from the upper skin 116 in a thickness direction of the blade body 100 such that the upper skin 116 and the lower skin 118 define a space 119 there between. The spar 112 may comprise parallel plates which extend substantially in the thickness direction of blade body 100 from the upper skin 116 to the lower skin 118. Both, the upper and lower skins 116,118, extend from the leading edge 108 to the trailing edge 110. The upper skin 116 forms a suction surface 120 of the airfoil profile of the blade body 100 and the lower skin 118 forms a pressure surface 122 (not shown in Fig. 3) of the airfoil profile of the blade body 100. Accordingly, the suction surface 120 and the pressure surface 122 are spaced apart from each other in the thickness direction. Fig. 3 further shows the boundary area 230, in particular an exposed boundary surface of the boundary area which is exposed to the outer surroundings of the blade body, arranged on the blade body 100. The boundary area 230 may be arranged at the upper and/or lower skins 116,118. As shown in Fig. 3, the exposed boundary surface of the boundary area 230 flushes with the skin of the blade body 100. The boundary area 230 may be connected to a detecting light guide 226 which may be connected to a light source 210 (not shown in Fig. 3) for emitting a detecting light beam to detect an ice layer formed over the exposed boundary surface of the boundary area 230 which will be explained later.

As the wind turbine blade 20 cuts through the air, the air which travels along the suction surface 120 has a higher speed then the air which travels along the pressure surface 122. As a result, the pressure on the pressure surface 122 is bigger than the pressure on the suction surface 120. The difference in the pressures causes a lift or a force to be exerted onto the pressure surface 120 approximately in the thickness direction of the blade body 100. The lift or force displaces the wind turbine blades 20 and in turn rotates the wind turbine blades 20 at about and around the axis (of the nacelle 16).

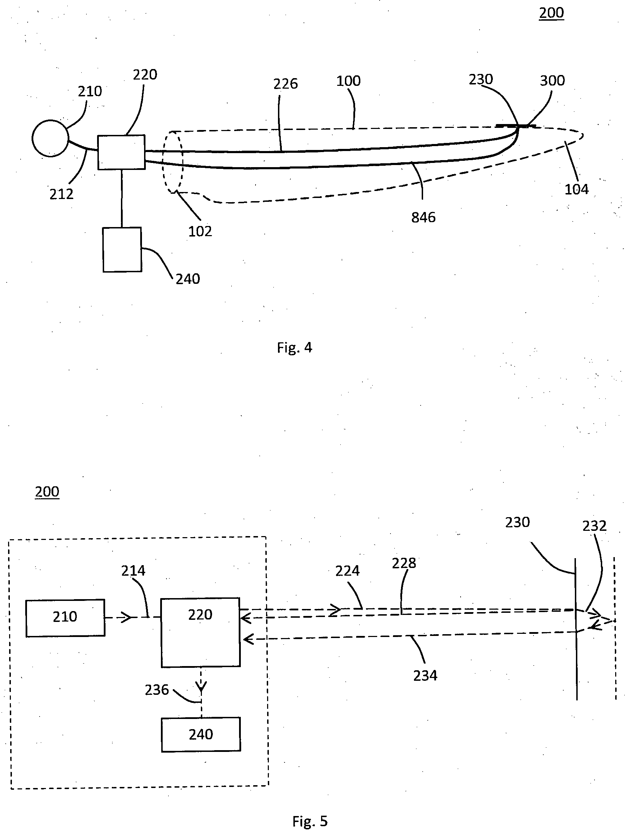

Fig. 4 shows an exemplary embodiment of the system 200 of present invention for detecting an ice layer 300 formed on the blade body 100. The system 200 includes a light source 210. A light splitting optical element 220 is optically connected to the light source 210. The light splitting optical element 220 may be connected to the light source 210 via an emitting light guide 212. The boundary area 230 is optically connected to the light splitting optical element 220. The boundary area 230 is arranged at the blade body 100 so as to be exposed to the outer surroundings of the blade body 100. The boundary area 230 may be connected to the light splitting optical element 220 via a detecting light guide 226. A light measuring device 240 is optically connected to light splitting optical element 220. The light measuring device 240 may be connected to the light splitting optical element 220 via a measuring light guide 242.

The boundary area 230 may be connected to the light measuring device 230 via a return light guide 244, or alternatively via the detecting light guide 226.

Fig. 5 shows a schematic diagram of the light path travelled between the components in the system 200. The light source 210 emits the light beam 214 to the light splitting optical element 220. The light splitting optical element 220 receives the light beam 214 emitted from the light source 210 and splits the light beam 214 received from the light source 210 into a reference light beam 222 and a detecting light beam 224. The reference light beam 222 may be reflected into the light measuring device 240 with a reflective mirror (not shown in Fig. 4) and/or via a light guide. The detecting light beam 224 is transmitted towards the boundary area 230. The boundary area 230 receives the detecting light beam 224, reflects an internal reflected part 228 (internal reflected light beam) of the detecting light beam 224 at the boundary area 230 and transmits a transmitting part 232 of the detecting light beam 224 to the outer surroundings of the blade body 100 through the boundary area 230. The internal reflected part 228 may be transmitted towards the light splitting optical element 220. The boundary area 230 allows an external reflected part 234 of the transmitting part 232 of the detecting light beam 224, which has been reflected by a reflective surface, e.g. an outer surface of the ice layer 300, from outside of the blade body 100, to be re-transmitted through the boundary area 230. The external reflected part 234(external reflected light beam) is transmitted towards the light splitting optical element 220. The light measuring device 240 receives the reference light beam 222, the internal reflected part 228 and the external reflected part 234 and analyses the received light which forms for example a recieved light beam 236 comprising for example the reference light beam 222, the internal reflected part 228 and the external reflected part 234 and determines the presence and/or thickness of the ice layer 300 on the blade body 100 dependent on the analysis as will be explained later.

The light source 210 emits the light beam 214 for the system 200. The light beam 214 emitted from the light source 210 is transmitted to the light splitting optical element 220 via the emitting light guide 212. The light beam 214 emitted by the light source 210 may have a broad spectrum or a plurality of wavelengths or a single wave length. The light beam 214 emitted from the light source 210 may include white light, infrared light or other lights of different wavelengths e.g. coloured lights. The range of wavelengths of the white light may be from 700nm to 1350nm, 800nm to 1250nm, 900nm to 1150nm. The light source 210 may include one or more Light Emitting Diodes (LED), super luminescent LED, Multimode Laser Diode (MLD) and equivalent. White light may be used to determine the presence and/or thickness of the ice layer 300 as it provides a more accurate measurement of the thickness of the ice layer 300 on the blade body 100, because of its broad light spectrum. Further, additional light sources may be arranged.

The light splitting optical element 220 is adapted to receive the light beam 214 emitted from the light source 210 via the emitting light guide 212 and to split the light beam 214 from the light source 210 into the reference light beam 222 and the detecting light beam 224. The light splitting optical element 220 may be adapted to split the light beam 214 in a 50/50 ratio whereby the light beam 214 from the light source 210 may be split into the reference light beam 222 which is approximately 50% of the light beam 214 and the detecting light beam 224 which is approximately 50% of the light beam 214. Although, the light beam 214 from the light source 210 is split in a 50/50 ratio, other split ratios e.g. 60/40, 70/30 are also possible. The light splitting optical element 220 may include a 50/50 beam splitter. The light splitting optical element 220 may include at least two triangular prisms, each prism having a base, wherein the two prisms are in contact with each other at their bases which form the prism interface. The light beam 214 from the light source 210 enters one of the prisms from one side and impacts the prism interface at an angle, e.g. substantially 45° to the interface, and the light beam 214 may be split into the reference light beam 222 and detecting light beam 224 at the prism interface where their bases meet. The light splitting optical element 220 may include a half-silvered mirror placed at an angle to the path of the light beam 214, e.g. substantially 45° to the path, whereby light from the light source 210 may be split into the reference light beam 222 and the detecting light beam 224 after the light beam 214 impacts the mirror. The light splitting optical element 220 receives the internal reflected part 228 and the external reflected part 234 from the boundary area 230 and may combine them with the reference light beam 222 to form the received light beam 236 and to emit the received light beam 236 to the light measuring device 240.

The boundary area 230, in particular the exposed boundary surface of the boundary area 230, may be arranged at the blade body 100 as shown in Figs. 2 and 3. The boundary area 230 may be formed on the upper and/or skins 116,118 such that the exposed boundary surface of the boundary area 230 is flush with the upper or lower skin 116,118 of the blade body 100. As shown in Figs. 2 and 3, the boundary area 230 may be arranged at the leading edge 108 of the blade body 100 where the ice layer 300 tends to accumulate at the leading edge 108 of the blade body 100 which is where the blade 20 meets the wind head on. The boundary area 230 may be arranged on any part of the skins 116, 118 that requires detection of ice. The boundary area 230 may be arranged at about a distance substantially one third of the length from the blade root 102 to the blade tip 104 from the blade tip 104 (see Fig. 2) where the ice layer 300 may be formed and has the biggest effect on the performance of the wind turbine blade 20.

The light measuring device 240 may be connected to the light splitting optical element 220 for receiving the received light beam 236 which may include the reference light beam 222, the internal reflected part 228, and the external reflected part 234. The light measuring device 240 may include a spectral splitting element (not shown in Fig. 4), e.g. a prism, for splitting the received light beam 236 according to its wavelengths, i.e. a spectrum, and a sensor array, e.g. a plurality of light sensitive photodiodes, to receive and measure the intensities of the received light beam 236 dependent on its wavelengths to measure the spectral properties, e.g. wavelengths, intensities at specific wavelengths, of the received light beam 236 which may include the reference light beam 222, the internal reflected part 228, and the external reflected part 234. The intensities of the received light dependent on its wavelengths may represent spectral data. The light measuring device 260 may include a spectrometer.

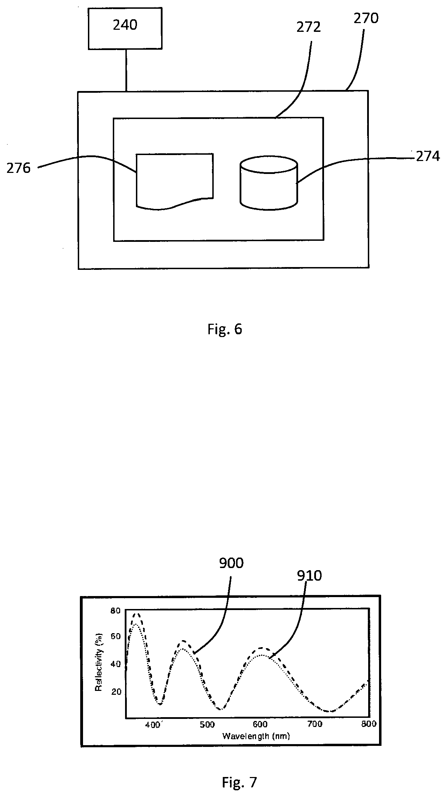

As shown in Fig. 6, the system 200 may further include a computing device 270 connected to the light measuring device 240. The computing device 270 may be loaded with a program 272 to determine the thickness of the ice layer 300. The program 272 may include a database 274 of pre-determined data pertaining to different thicknesses of ice layers 300. The pre-determined data may include reflectivity vs. wavelength curves of different thicknesses of ice layers 300.

Fig: 7 shows a typical thickness curve 900 of a certain thickness of ice layer 300. The program 272 may include algorithms 276 e.g. Fast Fourier Transformation Algorithm, for transforming the spectral data into data which are representative for the presence and/or thickness of the ice layer 300 (representative data), e.g. intensities as a function of thickness curves, to determine the thickness of the ice layers 300.

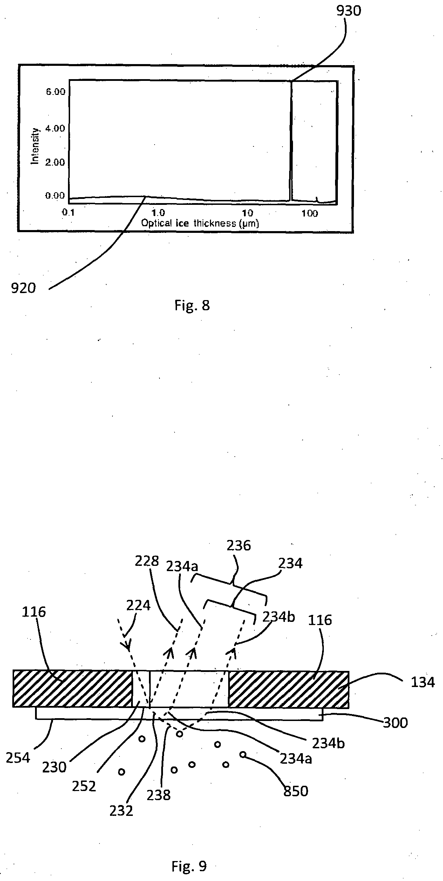

The representative data may include intensity vs. ice thickness graph 920, as shown in Fig. 8, such that the thickness of the ice layer 300 may be identified by an intensity peak 930 at the respective thickness. The computing device 270 obtains the spectral data, e.g. intensity, wavelength, from the light measuring device 240 and converts the obtained spectral data into data which are representative (representative data) for determining the presence and/or thickness of the ice layer 300 on the blade body 100. The converting of the spectral data into the representative data may be performed by a Fourier Transformation, such as a fast Fourier Transformation (FFT), on the spectral data. The converted spectral data, i.e. representative data, include at least one intensity peak 930 for a specific thickness wherein the thickness of the ice layer 300 can be determined as the thickness at which the intensity peak 930 occurs.

With respect to Figs. 4 and 5, the system 200 may include a lens for focusing the detecting light beam 224 onto a predetermined location or directing the detecting light beam 224 to a certain angle from the boundary area 230. The lens may be arranged adjacent the boundary area 230 and within the blade body 100. The lens may also be arranged at the axial end of the detecting light guide 226 between the axial end and the boundary area 230 within the blade body 100. The lens may be part of the boundary area 230. In any case, the lens may be arranged to direct the detecting light beam 224 in a direction towards the outer surrounding of the blade body 100 through the boundary area 230.

The system 200 may include a light guide holder 204 (see Fig. 3) which supports the detecting light guide 226 and positions the light guide 226 adjacent the boundary area 230 from within the blade body 100 and holds the light guide 202 in place. The light guide holder 204 may be attached to the skin 116,118 of the blade body from within the blade body 100 and secured to the skin 116,118 by conventional means e.g. screwed on, snap on.

The light guides 212, 226, 242, 244 may include fibre optic cables. The fibre optic cable may be a single or a multi-mode fibre optic cable. A multi-mode core fibre optic cable has a higher dispersion compared with single mode due to its larger core size and is able to handle wavelengths of 850nm (with LED) and 1300nm (with laser). A single core fibre optic cable requires a more expensive laser as a light source and is able to handle wavelengths of 1310 and 1550 nm. The detecting light guide 226 may extend from the light source 210 in the hub 18 through the blade root 102 and the space 119 of the blade body 100 and to the boundary area 230. The detecting light guide 226 may extend within the spar 112 as shown in Fig. 3 and through the spar 112 and to the boundary area 230.

The boundary area 230 may be an axial end of the detecting light guide 226, which may be for example the exposed boundary surface. The boundary area 230 may alternatively include an emitter (not shown in the figures) for emitting the transmitting part 232 of the detecting light beam 224 and a receiver (not shown in the figures) for receiving the external reflected part 234. The emitter may be arranged next to the receiver. The emitter and the receiver may be optically connected to the detecting light guide 226 and the return light guide 244 respectively. The emitter and the receiver may be made as a single unit or module whereby the distance between the emitter and the receiver is fixed. A single light guide may be used to replace the detecting light guide 226 and return light guide 244. However, the proximity of the receiver from the emitter may vary depending on the design requirements.

Fig. 9 shows a detailed view of an exemplary embodiment of the boundary area 230 and the paths taken by the respective light beams during detection of the ice layer 300. As shown in Fig. 9, there is an accumulation of ice layer 300 on the blade body 100. The ice layer 300 has a first side facing the blade body 100 and a second side (outer side)on the other side or opposite side of the ice layer 300 which faces away from the blade body 100. The second side is in contact with the air of the outer sourroundings. A first boundary surface 252 of the boundary area 230, which is for example the exposed surface of the boundary area 230 is in contact with the first side of ice layer 300. The first boundary surface 252 receives the detecting light beam 224 and transmits the transmitting part 232 of the detecting light beam 224 to the outer surroundings of the blade body 100 through the first boundary surface 252 of the boundary area 230 and into the ice layer 300. The external reflected part 234 may have at least a first external reflected part 234a and a second external reflected part 234b. The first external reflected part 234 is reflected at the second side 254 of the ice layer 300. The second side 254 of the ice layer 300 reflects the first external reflected part 234a of the transmitting part 232 back towards the boundary area 230 and transmits a further transmitting part 238 of the transmitting part 232 into the air. The transmitting part 232 may be refracted as it enters the ice layer 300 and deviates from the original direction of detecting light beam 224. The further transmitting part 238 may be reflected by air particles 850 in the air towards the second side 254 of the ice layer 300 as the second external reflected part 234b. The second side 254 of the ice layer 300 receives the second external reflected part 234b and transmits the second external reflected part 234b towards the boundary area 230. The first boundary surface 252 allows the first external reflected part 234a and the second external reflected part 234b of the transmitting part 232 of the detecting light beam 224, which have been reflected from outside of the blade body 100, to be re-transmitted through the boundary area 230. Although only two external reflected parts 234a, 234b are shown, there may be many more reflected parts that have been reflected within the ice layer 300 and reflected into the boundary area 230. Only two reflected parts 234a, 234b are shown to simplify the explanation of the system 200.

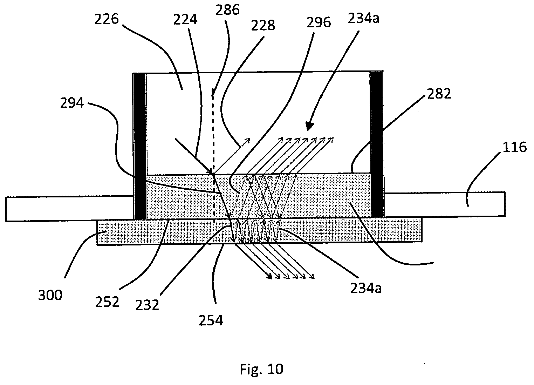

As shown in Fig. 10, the boundary area 230 may include a substrate 280, the substrate 280 for example may be a normal transparent substrate or a lens. The substrate 280 comprises the first boundary surface 252, which may for example be the exposed surface of the boundary area 230, and a second boundary surface 282 spaced apart from the first boundary surface 252. The first boundary surface 252 is arranged on the substrate 280 opposite to the second boundary surface 282. The first boundary surface 252 may face the outer surroundings of the blade body 100 and may flush with the skin 116, 118 of the blade body 100. The second boundary surface 282 may face the detecting light guide 226 and may be adjacent to and/or in direct contact with the axial end of the detecting light guide 226. The substrate 280 having the first and second boundary surfaces 252, 282 may extend across the axial end of the detecting light guide 226 such that the axial end of the detecting light guide 226 may be covered by the substrate 280. The covering of the detecting light guide 226 by the substrate 280 prevents dirt and foreign objects from entering the interior of the blade body 100. Further, the substrate 280 may affect the determining of the ice thickness e.g. when used as a reference signature in an ice detection algorithm.

The second boundary surface 282 receives the detecting light beam 224 from the detecting light guide 226 and reflects a first internal reflected part 228, which corresponds to the internal reflected part 228 of the preceding embodiments, of the detecting light beam 224 away from the second boundary surface 282. The second boundary surface 282 transmits a first transmitting part 294 of the detecting light beam 224 towards the first boundary surface 252. The first boundary surface 252 reflects a second internal reflected part 296 towards the second boundary surface 282 and transmits a second transmitting part 232, which corresponds to the transmitting part 232 of the preceding embodiments, of the first transmitting part 294 into the ice layer 300. The second transmitting part 232 is refracted upon entering the ice layer 300 and multiple reflection of the second transmitting part 232 may occur as shown in Fig. 10. As mentioned above, the boundary area 230 receives the external reflected part 234 through the first boundary surface 252 and transmits the external reflected part 234 towards and through the second boundary surface 282 and into the return light guide 244. A single light guide may be used to replace the detecting light guide 226 and the return light guide 244. In any case, the angle of incidence of the detecting light beam 224 or the transmitting light parts 232, 294 with respect to the second boundary surface 282 and the first boundary surface 252, respectively, should not be bigger than the critical incident angle so as to prevent total reflection within the substrate 280 or the ice layer 300 where no light is transmitted out of the boundary surfaces 252,282. In Fig. 10, the refraction of the first transmitting part 294 within substrate 294 towards a normal 286, i.e. a line perpendicular to the ice layer 300 and the second boundary surface 282 of the substrate 280 intersecting the point of incidence of detecting light beam 224 onto the second boundary surface 282, indicates that the refractive index of the detecting light guide 226 is smaller than the refractive index of the substrate 280. A refraction of the detecting light beam 224 away from the normal would indicate that the refractive index of the second boundary surface 282 would be bigger than the refractive index of the substrate 280. Comparable effects arrise at the first boundary surface 252 where the second transmitting part 232 of the detecting light beam 224 enters the ice layer 300. The substrate 280 may be transparent and may be formed by or includes glass or plastics. The glass may be borosilicate glass, e.g. Pyrex®.

With respect to figure 5, the system 200 may include an analogue to digital (A/D) converter unit. The A/D converter unit may be connected to the light measuring device 240 for converting the analogue signals from the light measuring device 240 into digital signals so that the measurements can be read by the computing device 270.

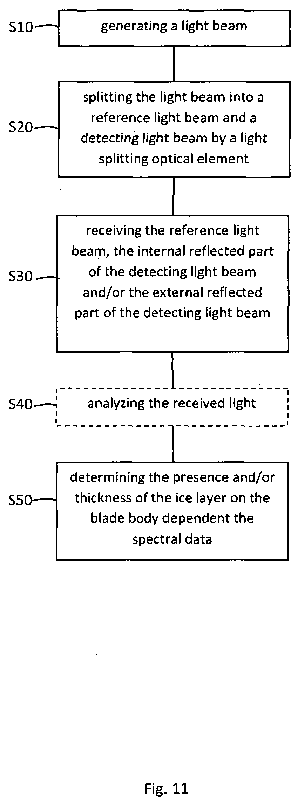

To detect the presence and/or determine the thickness of the ice layer 300 on the blade body 100, the following method as shown in Fig. 11 is used.

In step S10, a light beam 214 is generated. The light beam 214 may be generated by the light source 210.

In step S20, the generated light beam 214 is split into the reference light beam 222 and the detecting light beam 224, for example with the light splitting optical element 220 which is optically connected to the boundary area 230. The boundary area 230 receives the detecting light beam 224, reflects the internal reflected part 228 of the detecting light beam 224 back to the light splitting optical element 220 and transmits the transmitting part 232 of the detecting light beam 224 through the boundary area 230 to the outer surroundings of the blade body 100. When there is an ice layer 300 on the blade body 100, a first external reflected part 234a of the transmitting part 232 of the detecting light beam 224 is reflected towards the boundary area 230 and the further transmitting part 238 is transmitted through ice layer 300. The further transmitting part 238 is reflected as the second external reflected part 234b towards the ice/air interface 254 and enters back into the ice layer 300 and through the boundary area 230. The external reflected part 234, which includes the first and second external reflected parts 234a, 234b, of the transmitting part 232 of the detecting light beam 224 re-transmits through the boundary area 230.

In step S30, the reference light beam 222, the internal reflected part 228, and/or the external reflected part 234 of the detecting light beam 224 are received, for example by the light measuring device 240 .

In step S40, the received light is analysed, for example by a processor 270 of the light measuring device 240.

In step S50, the presence and/or thickness of the ice layer 300 on the blade body 100 is determined dependent on the spectral data.

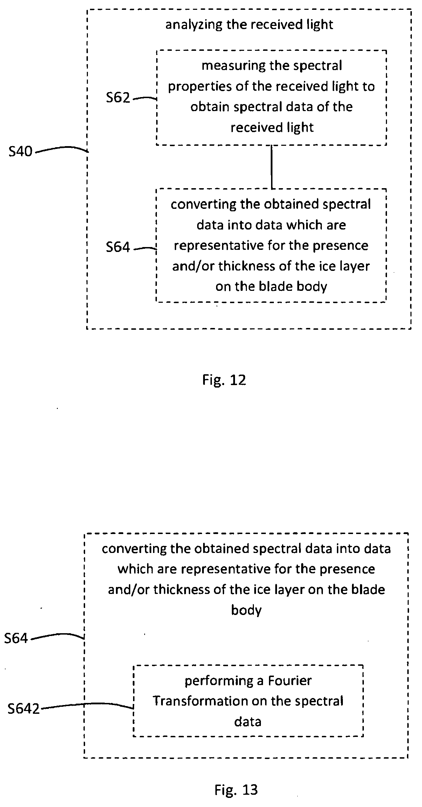

Figure 12 shows a flowchart of a method for analysing the received light, which may be carried out in step 40 of the preceding method.

In step S62 the spectral properties of the received light are measured, for example by the light measuring device 240, to obtain spectral data of the received light.

In step S64 where the obtained spectral data are converted into data which are representative for the presence and/or thickness of the ice layer 300 on the blade body 100 (representative data 910).

Figure 13 shows a flowchart of a method of converting the spectral data which may be carried out in step S64 of the method shown in figure 12.

In step S642 the converting of the spectral data is carried out by performing a Fourier Transformation on the spectral data. ,

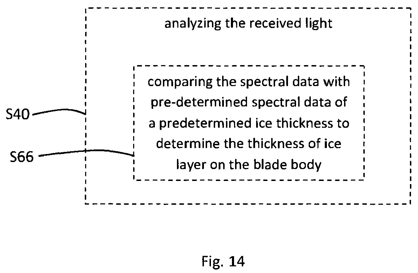

Figure 14 shows a flowchart of a method of converting the spectral data which alternatively may be carried out in step S64 of the method shown in figure 12.

In step S66 the spectral data are compared with pre-determined spectral data of a pre-determined ice thicknesses to determine the thickness of ice layer 300 on the blade body 100.

When the transmitting part 232 enters the ice layer 300it is refracted due to the difference in refractive index between the boundary area 230 and the ice layer 300. Apart from refraction, the transmitting part 232 is also reflected within the ice layer 300. The refraction and refraction of the transmitting part 232 causes a change in the wavelength and path length of the transmitting part 232. When the further transmitting part 238 is further refracted in the air and reflected by the air particles, the wavelength and path length of the external reflected part of the further transmitting part 238 is changed again. The change in the wavelength and path length of those light beams causes a phase difference between those light beams. As shown in Fig. 9, the internal reflected part 228, the external reflected part 234, which includes the first external reflected part 234a and the second external reflected part 234b, were reflected and refracted within the boundary area 230, for example at the first and/or the second boundary surface 252, 284, ice layer 300, and air accordingly. The reflected parts 228, 234 are reflected back through the boundary area 230 and are combined into the received light beam 236. When the reflected parts 228, 234 are combined, the intensity of the received light beam 236 may be reduced or increased due to the phase shift of each light beam or phase difference between the reflected parts 228, 234 and the wavelength of each light beam is changed. The phase difference allows the received light beam 236 to have a unique spectrum that is dependent on the thickness of the ice layer 300. From the analysis of the unique spectrum of the received light beam 236, the thickness of the ice layer 300 can be determined. The spectrum can be plotted into a curve 900, e.g. a reflectivity vs. wavelength curve as shown in Fig. 7, and the empirical spectra curve 910 may be fitted to pre-determined or pre-plotted curve 900 of various ice layer thicknesses to determine the thickness of the ice layer 300. The empirical spectra curve 910 may also be transformed using e.g. Fast Fourier Transformation, into relational value, e.g. intensity vs. ice thickness graph as shown in Fig. 9, wherein identifying the intensity peak enables reading off the thickness of the ice layer 300 from the graph.

In another embodiment of the present invention, the system 200 may include the light source 210 for emitting the light beam 214, the boundary area 230 arranged on the blade body 100 and optically connected to the light source 210. The light measuring device 240 optically connected to the boundary area 230. The system 200 includes an optical Y-cable having a single end at one end of the cable and a double end at the other end of the cable wherein the double end has a first and second end. The boundary area 230 may be optically connected to the light source 210 at the single end and the light source 210 may be optically connect to the first end and the light measuring device 240 may be optically connected to the second end of the Y-cable. So, the Y-cable substitutes and/or works as the optical element 220. The light beam 214 is emitted from the light source 210 and transmitted to the boundary area 230. After the reflection arid refraction of the light beam 214 as described above, the internal reflected part 228 and the external reflected part 234 are guided to the light measuring device 240. As above, the light measuring device 240 receives the reflected parts 228, 240 and converts the measured spectral properties of the light beams 228, 240 into empirical spectral lines and readable data to determine the thickness and therefore the presence of the ice layer 300.

The light source 210, the light splitting optical element 220, and the computing device 270 may be located in the hub 18 or nacelle 16 (denoted by box 204 in Fig. 4). The components may be located in other parts of the wind turbine 10 and are not limited to the present arrangement. For example, the computing device 270 may be located in the hub 18 or the tower 14.

The advantages of the system are that, as there are no electrical components used in the wind turbine blade 20, it reduces the risk of the wind turbine 10 or the wind turbine blades 20 being struck by lightning. Further, it also prevents electromagnetic interferences from lightning strikes. With a local ice detection system, which identifies not only the presence of ice formation but also the thickness of the ice layer 300, de-icing techniques can be deployed more effectively. In terms of economical terms, ice formation on the wind turbine 10 leads to increased loads and loss of production factor. Hence, effective ice detection for de-icing would reduce wind turbine loads and loss production factor. In terms of maintenance, as the main components of the system 200 can be placed in the hub 18 or nacelle 16, it is easier to maintain those component than if they were on the blade body 100.

While the invention has been particularly shown and described with reference to specific embodiments, it should be understood by those skilled in the art that various changes in form and detail may be made therein without departing from the scope of the invention as defined by the appended claims.

The scope of the invention is thus indicated by the appended claims and all changes which come within the meaning of the claims are therefore intended to be embraced.

## Claims

1. A wind turbine (10) comprising:
a hub (18) rotatable about an axis;
an elongated blade body (100) extending along a longitudinal axis (106) and having a blade root (102) at one longitudinal end of the blade body (100) and a blade tip (104) at another longitudinal end of the blade body (100), wherein the blade body (100) is connected to the hub (18) via the blade root (102);
a leading edge (108) and a trailing edge (110), both extending from the blade root (102) to the blade tip (104), the trailing edge (110) spaced from the leading edge (108) in a span-wise direction of the blade body;
an upper skin (116) and a lower skin (118) extending from the leading edge (108) to the trailing edge (110) and from the blade root (102) to the blade tip (104), the lower skin (118) spaced from the upper skin (116) in a thickness direction of the blade body (100),
a system (200) for detecting an ice layer on the blade body, the system comprising:
a light source (210) for emitting a light beam (214);
a light splitting optical element (220) optically connected to the light source (210) so as to receive the light beam emitted from the light source (210), the optical element (220) adapted to split the light beam received from the light source (210) into a reference light beam (222) and a detecting light beam (224);
a boundary area (230) which is arranged at the blade body so as to be exposed to the outer surroundings of the blade body and which is optically connected to the light splitting optical element (220) such as to receive the detecting light beam (224) and to reflect an internal reflected part (228) of the detecting light beam at the boundary area and to transmit a transmitting part (232) of the detecting light beam to the outer surroundings of the blade body through the boundary area (230) and to allow an external reflected part (234) of the transmitting part of the detecting light beam, which has been reflected from outside of the blade body, to be re-transmitted through the boundary area (230);
a light measuring device (240) optically connected to the light splitting optical element (220) so as to receive the reference light beam (222), the internal reflected part (228) and the external reflected part (234) of the detecting light beam, wherein the light measuring device (240) is configured to analyze the received light and to determine the presence and/or thickness of the ice layer on the blade body dependent on the analysis.

2. The turbine according to claim 1, wherein the analysis comprises measuring the spectral properties of the received light to obtain spectral data of the received light and converting the obtained spectral data into data which are representative for the presence and/or thickness of the ice layer on the blade body.

3. The turbine according to claim 2, wherein the converting of the spectral data into the data which are representative for the presence and/or thickness of the ice layer on the blade body comprises performing a Fourier Transformation on the spectral data.

4. The turbine according to claim 2 or 3, wherein the analysis comprises comparing the spectral data with pre-determined spectral data of a pre-determined ice thickness to determine the thickness of ice layer on the blade body.

5. The turbine according to claim 2 to 4, wherein the measuring device (240) comprises a spectral splitting element so as to split up the received light according to its wavelengths and a sensor array for measuring the intensities of the received light dependent on its wavelengths for measuring the spectral properties of the received light, wherein the intensities of the received light dependent on its wavelengths represent the spectral data.

6. The turbine according to one of claims 1 to 5, wherein the boundary area (230) is arranged at the blade body so as to allow a first external reflected part (234a) and a second external reflected part (234b) of the transmitting part of the detecting light beam, which have been reflected from outside of the blade body, to be re-transmitted through the boundary area (230).

7. The turbine according to one of claims 3 to 6, wherein a graph representing the converted spectral data comprises at least one intensity peak for a specific thickness wherein the thickness of the ice layer can be determined on the thickness at which the intensity peak occurs.

8. The turbine according to any one of claims 1 to 7, wherein an exposed surface of the boundary area is flush with the upper or lower skin of the blade body.

9. The turbine according to any one of claims 1 to 8, wherein the boundary area (230) is arranged at the leading edge of the blade body.

10. The turbine according to one of claims 1 to 9, wherein the boundary area (230) is arranged at a distance substantially one third of the length from the blade root to the blade tip from the blade tip along the leading edge.

11. The turbine according to one of claims 1 to 10, wherein the optical element (220) comprises at least two triangular prisms, each prism having a base, wherein the two prisms are in contact with each other at their base to form a prism interface at an angle to the light beam wherein the light beam upon impacting the prism interface is split into the reference light beam and detecting light beam.

12. The turbine according to one of claims 1 to 10, wherein the optical element (220) comprises a half-silvered mirror arranged at an angle to the light beam wherein the light beam upon impacting the mirror is split into the reference light beam and detecting light beam.

13. The turbine according to one of claims 1 to 12, wherein the optical element (220) is a 50/50 beam splitter.

14. The turbine according to one of claims 1 to 13, wherein the light source emits white light.

15. The turbine according to one of claims 1 to 14, wherein the light measuring device (240) comprises a spectrometer.

16. The turbine according to one of claims 1 to 15, wherein the boundary area (230) comprises a first (252) and second (282) boundary surface, the second boundary surface (282) being spaced apart from the first boundary surface (252), wherein the first boundary surface (252) faces the outer surroundings of the blade body and the second boundary surface (282) is optically connected to the light splitting optical element (220) and wherein the second boundary surface (282) is adapted to receive the detecting light beam, to reflect the internal reflected part of the detecting light beam and to transmit a first transmitting part of the detecting light beam, and wherein the first boundary surface (252) is adapted to receive the first transmitting part, reflect a second reflected part towards the second boundary surface, transmit a second transmitting part of the detecting light beam into the outer surroundings and receive the external reflected part of the second transmitting part of the detecting light beam.

17. A method for determining the presence and/or thickness of an ice layer on a blade body (100) of a wind turbine (10) comprising:
generating a light beam;
splitting the light beam into a reference light beam (222) and a detecting light beam (224) by a light splitting optical element, which is optically connected to a boundary area (230),
wherein an internal reflected part (228) of the detecting light beam is reflected at a boundary area (230) and a transmitting part (232) of the detecting light beam transmits through the boundary area (230) to the outer surroundings of the blade body (100) and an external reflected part (234) of the transmitting part of the detecting light beam re-transmits through the boundary area (230);
receiving the reference light beam (222), the internal reflected part (228) of the detecting light beam and/or the external reflected part (234) of the detecting light beam;
analyzing the received light; and
determining the presence and/or thickness of the ice layer on the blade body (100) dependent the analysis.

## Patentansprüche

1. Windturbine (10), die umfasst:
eine Nabe (18), die um eine Achse drehbar ist;
einen langgestreckten Blattkörper (100), der sich entlang einer Längsachse (106) erstreckt und der eine Blattwurzel (102) an einem längs gerichteten Ende des Blattkörpers (100) und eine Blattspitze (104) an einem anderen längs gerichteten Ende des Blattkörpers (100) aufweist, wobei der Blattkörper (100) mit der Nabe (18) über die Blattwurzel (102) verbunden ist;
eine Vorderkante (108) und eine Hinterkante (110), wobei sich beide von der Blattwurzel (102) zu der Blattspitze (104) erstrecken, wobei die Hinterkante (110) von der Vorderkante (108) in einer Spannweitenrichtung des Blattkörpers beabstandet angeordnet ist;
eine obere Haut (116) und eine untere Haut (118), die sich von der Vorderkante (108) zu der Hinterkante (110) und von der Blattwurzel (102) zu der Blattspitze (104) erstrecken, wobei die untere Haut (118) von der oberen Haut (116) in einer Dickenrichtung des Blattkörpers (100) beabstandet angeordnet ist,
ein System (200), um eine Eisschicht auf dem Blattkörper zu detektieren, wobei das System umfasst:
eine Lichtquelle (210), um einen Lichtstrahl (214) zu emittieren;
ein Licht aufspaltendes optisches Element (220), das optisch mit der Lichtquelle (210) verbunden ist, um den Lichtstrahl, der von der Lichtquelle (210) emittiert wird, zu empfangen, wobei das optische Element (220) dafür ausgelegt ist, um den Lichtstrahl, der von der Lichtquelle (210) erhalten worden ist, in einen Referenzlichtstrahl (222) und in einen Detektionslichtstrahl (224) aufzuspalten;
einen Grenzbereich (230), der an dem Blattkörper angeordnet ist, um gegenüber den äußeren Umgebungen des Blattkörpers freiliegend zu sein und diesen ausgesetzt zu sein und wobei dieser Grenzbereich optisch mit dem das Licht aufspaltenden optischen Element (220) derart verbunden ist, um den Detektionslichtstrahl (224) zu empfangen und um einen inneren reflektierten Teil (228) des Detektionslichtstrahls (224) an dem Grenzbereich zu reflektieren und um einen Übertragungsteil (232) des Detektionslichtstrahls durch den Grenzbereich (230) hindurch an die äußeren Umgebungen des Blattkörpers zu übertragen und um einem externen reflektierten Teil (234) des Übertragungsteils des Detektionslichtstrahls, der von außerhalb des Blattkörpers reflektiert worden ist, zu ermöglichen, um durch den Grenzbereich (230) erneut übertragen zu werden;
eine Lichtmessvorrichtung (240), die optisch mit dem Licht aufspaltenden optischen Element (220) verbunden ist, um den Referenzlichtstrahl (222), den inneren reflektierten Teil (228) und den externen reflektierten Teil (234) des Detektionslichtstrahls zu empfangen, wobei die Lichtmessvorrichtung (240) dafür konfiguriert ist, um das empfangene Licht zu analysieren und um das Vorhandensein und/oder die Dicke der Eisschicht auf dem Blattkörper in Abhängigkeit von der Analyse zu bestimmen.

2. Turbine nach Anspruch 1, wobei die Analyse ein Messen der Spektraleigenschaften des empfangenen Lichts umfasst, um Spektraldaten des empfangenen Lichts zu erhalten und um die erhaltenen Spektraldaten in Daten umzuwandeln, die repräsentativ für das Vorhandensein und/oder die Dicke der Eisschicht auf dem Blattkörper sind.

3. Turbine nach Anspruch 2, wobei das Umwandeln der Spektraldaten in die Daten, die repräsentativ für das Vorhandensein und/oder die Dicke der Eisschicht auf dem Blattkörper sind, ein Durchführen einer Fouriertransformation der Spektraldaten umfasst.

4. Turbine nach Anspruch 2 oder 3, wobei die Analyse ein Vergleichen der Spektraldaten mit vorgegebenen Spektraldaten einer vorgegebenen Eisdicke umfasst, um die Dicke der Eisschicht auf dem Blattkörper zu bestimmen.

5. Turbine nach Anspruch 2 bis 4, wobei die Lichtmessvorrichtung (240) ein das Spektrum aufspaltendes Element, um das empfangene Licht entsprechend seinen Wellenlängen aufzuspalten, und eine Sensorgruppe umfasst, um die Intensitäten des empfangenen Lichts in Abhängigkeit von seinen Wellenlängen zu messen, um die Spektraleigenschaften des empfangenen Lichts zu messen, wobei die Intensitäten des empfangenen Lichts von seinen Wellenlängen, die in den Spektraldaten dargestellt sind, abhängen.

6. Turbine nach einem der Ansprüche 1 bis 5, wobei der Grenzbereich (230) an dem Blattkörper angeordnet ist, um einem ersten externen reflektierten Teil (234a) und einem zweiten externen reflektierten Teil (234b) des Übertragungsteils des Detektionslichtstrahls, der von außerhalb des Blattkörpers reflektiert worden ist, zu ermöglichen, um durch den Grenzbereich (230) erneut übertragen zu werden

7. Turbine nach einem der Ansprüche 3 bis 6, wobei ein Schaubild, das die umgewandelten Spektraldaten darstellt, mindestens einen Scheitelwert der Intensität für eine spezifische Dicke umfasst, wobei die Dicke der Eisschicht bestimmt werden kann aus der Dicke, an der der Scheitelwert der Intensität auftritt.

8. Turbine nach einem der Ansprüche 1 bis 7, wobei eine freiliegende Oberfläche des Grenzbereichs bündig mit der oberen oder unteren Haut des Blattkörpers ist.

9. Turbine nach einem der Ansprüche 1 bis 8, wobei der Grenzbereich (230) an der Vorderkante des Blattkörpers angeordnet ist.

10. Turbine nach einem der Ansprüche 1 bis 9, wobei der Grenzbereich (230) in einem Abstand, der im Wesentlichen ein Drittel der Länge von der Blattwurzel zu der Blattspitze ausmacht, von der Blattspitze entlang der Vorderkante angeordnet ist.

11. Turbine nach einem der Ansprüche 1 bis 10, wobei das optische Element (220) mindestens zwei dreieckförmige Prismen umfasst, wobei jedes Prisma eine Grundfläche aufweist, wobei die zwei Prismen an ihrer Grundfläche im gegenseitigen Kontakt zueinander stehen, um eine Prismagrenzfläche mit einem Winkel gegenüber dem Lichtstrahl zu bilden, wobei der Lichtstrahl beim Auftreffen auf die Prismagrenzfläche aufgeteilt wird in den Referenzlichtstrahl und in den Detektionslichtstrahl.

12. Turbine nach einem der Ansprüche 1 bis 10, wobei das optische Element (220) einen halbversilberten Spiegel umfasst, der bei einem Winkel gegenüber dem Lichtstrahl angeordnet ist, wobei der Lichtstrahl beim Auftreffen auf den Spiegel aufgeteilt wird in den Referenzlichtstrahl und in den Detektionslichtstrahl

13. Turbine nach einem der Ansprüche 1 bis 12, wobei das optische Element (220) ein 50/50-Strahlaufteiler ist.

14. Turbine nach einem der Ansprüche 1 bis 13, wobei die Lichtquelle weißes Licht emittiert.

15. Turbine nach einem der Ansprüche 1 bis 14, wobei die Lichtmessvorrichtung (240) ein Spektrometer umfasst.

16. Turbine nach einem der Ansprüche 1 bis 15, wobei der Grenzbereich (230) eine erste (252) und eine zweite (282) Grenzoberfläche umfasst, wobei die zweite Grenzoberfläche (282) von der ersten Grenzoberfläche (252) beabstandet ist, wobei die erste Grenzoberfläche (252) den äußeren Umgebungen des Blattkörpers zugewandt ist und wobei die zweite Grenzoberfläche (282) mit dem Licht aufspaltenden optischen Element (220) optisch verbunden ist, und wobei die zweite Grenzoberfläche (282) dafür ausgelegt ist, den Detektionslichtstrahl zu empfangen, den inneren reflektierten Teil des Detektionslichtstrahls zu reflektieren und einen ersten Übertragungsteil des Detektionslichtstrahls zu übertragen, und wobei die erste Grenzoberfläche (252) dafür ausgelegt ist, den ersten Übertragungsteil zu empfangen, einen zweiten reflektierten Teil zu der zweiten Grenzoberfläche zu reflektieren, einen zweiten Übertragungsteil des Detektionslichtstrahls in die äußeren Umgebungen zu übertragen und den externen reflektierten Teil des zweiten Übertragungsteils des Detektionslichtstrahls zu empfangen.

17. Verfahren zum Bestimmen des Vorhandenseins und/oder der Dicke einer Eisschicht auf einem Blattkörper (100) einer Windturbine (10), das umfasst:
Erzeugen eines Lichtstrahls;
Aufspalten des Lichtstrahls in einen Referenzlichtstrahl (222) und in einen Detektionslichtstrahl (224) durch ein Licht aufspaltendes optisches Element, das optisch mit einem Grenzbereich (230) verbunden ist,
wobei ein innerer reflektierter Teil (228) des Detektionslichtstrahls an einem Grenzbereich (230) reflektiert wird und wobei ein Übertragungsteil (232) des Detektionslichtstrahls durch den Grenzbereich (230) hindurch an die äußeren Umgebungen des Blattkörpers (100) überträgt und wobei ein externer reflektierter Teil (234) des Übertragungsteils des Detektionslichtstrahls durch den Grenzbereich (230) hindurch erneut überträgt;
Empfangen des Referenzlichtstrahls (222), des inneren reflektierten Teils (228) des Detektionslichtstrahls und/oder des externen reflektierten Teils (234) des Detektionslichtstrahls;
Analysieren des empfangenen Lichts; und
Bestimmen des Vorhandenseins und/oder der Dicke der Eisschicht auf dem Blattkörper (100) in Abhängigkeit der Analyse.

## Revendications

1. Éolienne (10) comprenant:
un moyeu (18) pouvant tourner autour d'un axe;
un corps de pale allongé (100) s'étendant le long d'un axe longitudinal (106) et ayant une emplanture de pale (102) au niveau d'une extrémité longitudinale du corps de pale (100) et un bout de pale (104) au niveau d'une autre extrémité longitudinale du corps de pale (100), dans laquelle le corps de pale (100) est relié au moyeu (18) via l'emplanture de pale (102) ;
un bord d'attaque (108) et un bord de fuite (110), les deux s'étendant à partir de l'emplanture de pale (102) jusqu'au bout de pale (104), le bord de fuite (110) étant espacé du bord d'attaque (108) dans le sens de l'envergure du corps de pale ;
une peau supérieure (116) et une peau inférieure (118) s'étendant à partir du bord d'attaque (108) jusqu'au bord de fuite (110) et depuis l'emplanture de pale (102) jusqu'au bout de pale (104), la peau inférieure (118) étant espacée de la peau supérieure (116) dans le sens de l'épaisseur du corps de pale (100),
un système (200) pour détecter une couche de glace sur le corps de pale, le système comprenant:
une source de lumière (210) pour émettre un faisceau de lumière (214) ;
un élément optique de séparation de lumière (220) optiquement relié à la source de lumière (210) afin de recevoir le faisceau de lumière émis en provenance de la source de lumière (210), l'élément optique (220) étant conçu pour séparer le faisceau de lumière reçu en provenance de la source de lumière (210) en un faisceau de lumière de référence (222) et en un faisceau de lumière de détection (224) ;
une zone de frontière (230) qui est agencée au niveau du corps de pale afin d'être exposée à l'environnement extérieur du corps de pale et qui est optiquement relié à l'élément optique de séparation de lumière (220) de façon à recevoir le faisceau de lumière de détection (224) et à réfléchir une partie réfléchie interne (228) du faisceau de lumière de détection au niveau de la zone de frontière et à transmettre une partie de transmission (232) du faisceau de lumière de détection à l'environnement extérieur du corps de pale par l'intermédiaire de la zone de frontière (230) et pour permettre à une partie réfléchie externe (234) de la partie de transmission du faisceau de lumière de détection, qui a été réfléchie à partir de l'extérieur du corps de pale, pour être retransmis à travers la zone de frontière (230) ;
un dispositif de mesure de lumière (240) optiquement relié à l'élément optique de séparation de lumière (220) afin de recevoir le faisceau de lumière de référence (222), la partie réfléchie interne (228) et la partie réfléchie externe (234) du faisceau de lumière de détection, dans lesquelles le dispositif de mesure de lumière (240) est configuré pour analyser la lumière reçue et pour déterminer la présence et/ou l'épaisseur de la couche de glace sur le corps de pale en fonction de l'analyse.

2. Turbine selon la revendication 1, dans laquelle l'analyse comprend la mesure des propriétés spectrales de la lumière reçue pour obtenir des données spectrales de la lumière reçue et la transformation des données spectrales obtenues en données qui sont représentatives de la présence et/ou de l'épaisseur de la couche de glace sur le corps de pale.

3. Turbine selon la revendication 2, dans laquelle la transformation des données spectrales en données qui sont représentatives de la présence et/ou de l'épaisseur de la couche de glace sur le corps de pale comprend l'exécution d'une Transformation de Fourier sur les données spectrales.

4. Turbine selon la revendication 2 ou 3, dans laquelle l'analyse comprend la comparaison des données spectrales avec des données spectrales prédéterminées d'une épaisseur de glace prédéterminée pour déterminer l'épaisseur de couche de glace sur le corps de pale.

5. Turbine selon la revendication 2 à 4, dans laquelle le dispositif de mesure (240) comprend un élément de séparation spectrale afin de séparer la lumière reçue selon sa longueur d'onde et un groupement de capteurs pour mesurer les intensités de la lumière reçue en fonction de ses longueurs d'onde pour mesurer les propriétés spectrales de la lumière reçue, dans laquelle les intensités de la lumière reçue en fonction de ses longueurs d'onde représentent les données spectrales.

6. Turbine selon une des revendications 1 à 5, dans laquelle la zone de frontière (230) est agencée au niveau du corps de pale afin de permettre à une première partie réfléchie externe (234a) et à une seconde partie réfléchie externe (234b) de la partie de transmission du faisceau de lumière de détection, qui ont été réfléchies à partir de l'extérieur du corps de pale, d'être re-transmises par l'intermédiaire de la zone de frontière (230).

7. Turbine selon une des revendications 3 à 6, dans laquelle un graphique représentant les données spectrales transformées comprend au moins un pic d'intensité pour une épaisseur spécifique dans laquelle l'épaisseur de la couche de glace peut être déterminée sur l'épaisseur à laquelle le pic d'intensité se produit.

8. Turbine selon n'importe laquelle des revendications 1 à 7, dans laquelle une surface exposée de la zone de frontière est à fleur avec la peau supérieure ou inférieure du corps de pale.

9. Turbine selon n'importe laquelle des revendications 1 à 8, dans laquelle la zone de frontière (230) est agencée au niveau du bord d'attaque du corps de pale.

10. Turbine selon une des revendications 1 à 9, dans laquelle la zone de frontière (230) est agencée à une distance sensiblement d'un tiers de la longueur de l'emplanture de pale jusqu'au bout de pale à partir du bout de pale le long du bord d'attaque.

11. Turbine selon une des revendications 1 à 10, dans laquelle l'élément optique (220) comprend au moins deux prismes triangulaires, chaque prisme ayant une base, dans laquelle les deux prismes sont en contact l'un avec l'autre au niveau de leur base pour former une interface de prisme à un certain angle par rapport au faisceau de lumière dans lequel le faisceau de lumière en impactant l'interface de prisme est séparé en faisceau de lumière de référence et en faisceau de lumière de détection.

12. Turbine selon une des revendications 1 à 10, dans laquelle l'élément optique (220) comprend un miroir demi-argenté agencé à un certain angle par rapport au faisceau de lumière dans lequel le faisceau de lumière en impactant lors le miroir est séparé en faisceau de lumière de référence et en faisceau de lumière de détection.

13. Turbine selon une des revendications 1 à 12, dans laquelle l'élément optique (220) est un séparateur de faisceau 50/50.

14. Turbine selon une des revendications 1 à 13, dans laquelle la source de lumière émet une lumière blanche.

15. Turbine selon une des revendications 1 à 14, dans laquelle le dispositif de mesure de lumière (240) comprend un spectromètre.

16. Turbine selon une des revendications 1 à 15, dans laquelle la zone de frontière (230) comprend une première (252) et une seconde (282) surface de frontière, la seconde surface de frontière (282) étant espacée de la première surface de frontière (252), dans laquelle la première surface de frontière (252) fait face à l'environnement extérieur du corps de pale et la seconde surface de frontière (282) est optiquement reliée l'élément optique de séparation de lumière (220) et dans laquelle la seconde surface de frontière (282) est conçue pour recevoir le faisceau de lumière de détection, pour réfléchir la partie réfléchie interne du faisceau de lumière de détection et pour transmettre une première partie de transmission du faisceau de lumière de détection, et dans lequel la première surface de frontière (252) est conçue pour recevoir la première partie de transmission, réfléchir une seconde partie réfléchie vers la seconde surface de frontière, transmettre une seconde partie de transmission du faisceau de lumière de détection dans l'environnement extérieur et recevoir la partie réfléchie externe de la seconde partie de transmission du faisceau de lumière de détection.

17. Procédé pour déterminer la présence et/ou l'épaisseur d'une couche de glace sur un corps de pale (100) d'une éolienne (10) comprenant :
la production d'un faisceau de lumière;
la séparation du faisceau de lumière en un faisceau de lumière de référence (222) et en un faisceau de lumière de détection (224) par un élément optique de séparation de lumière, qui est optiquement relié à une zone de frontière (230),
dans lequel une partie réfléchie interne (228) du faisceau de lumière de détection est réfléchie au niveau d'une zone de frontière (230) et une partie de transmission (232) du faisceau de lumière de détection transmet à travers la zone de frontière (230) jusqu'à l'environnement extérieur du corps de pale (100) et une partie réfléchie externe (234) de la partie de transmission du faisceau de lumière de détection retransmet à travers la zone de frontière (230) ;
la réception du faisceau de lumière de référence (222), de la partie réfléchie interne (228) du faisceau de lumière de détection et/ou de la partie réfléchie externe (234) du faisceau de lumière de détection;
l'analyse de la lumière reçue ; et
la détermination de la présence et/ou de l'épaisseur de la couche de glace sur le corps de pale (100) en fonction de l'analyse.
